# FASCICULE DE BREVET EUROPEEN

(11) **EP 3 677 808 B1**
(45) Date de publication et mention de la délivrance du brevet: **07.04.2021**
(21) Numéro de dépôt: 19212387.5
(22) Date de dépôt: 29.11.2019
(51) Int. Cl.: F16D 23/14, F16D 13/58

(54) **MECANISME D'EMBRAYAGE POUR VEHICULE AUTOMOBILE ET EMBRAYAGE COMPRENANT UN TEL MECANISME D'EMBRAYAGE**
KUPPLUNGSMECHANISMUS FÜR KRAFTFAHRZEUG, UND KUPPLUNG, DIE EINEN SOLCHEN KUPPLUNGSMECHANISMUS UMFASST
CLUTCH MECHANISM FOR A MOTOR VEHICLE AND CLUTCH COMPRISING SUCH A CLUTCH MECHANISM

(30) Priorité: 17.12.2018 FR 1873111
(43) Date de publication de la demande: 08.07.2020
(73) Titulaire: VALEO EMBRAYAGES, 80009 Amiens (FR)
(72) Inventeur: DEFONTAINE, Rémy, AMIENS 80009 (FR); REGULSKI, Bernard, 80009 AMIENS (FR); FARINEAUX, Paul, 80009 AMIENS (FR)
(74) Mandataire: Vincent, Catherine Marie Marguerite

(56) Documents cités:
- CN-U- 202 326 813
- CN-U- 203 051 539
- FR-A1- 2 750 469
- GB-A- 2 193 284
- KR-B1- 100 705 613

## Description

La présente invention se rapporte à un mécanisme d'embrayage pour véhicule automobile et un embrayage comprenant un tel mécanisme d'embrayage.

Un tel mécanisme d'embrayage peut être utilisé notamment dans un véhicule automobile, par exemple un véhicule léger, un véhicule poids lourd ou un autobus afin de relier le moteur à explosion à la transmission. Le mécanisme d'embrayage comprend typiquement un couvercle fixé au volant moteur du moteur à explosion, un diaphragme de type Belleville et généralement un système d'accrochage d'une butée d'embrayage. Le mécanisme d'embrayage comprend également un plateau de pression apte à frotter sur un disque d'embrayage. Le mécanisme d'embrayage est actionné à l'aide d'une butée d'embrayage pour passer de la position embrayée dans laquelle le couple moteur est transmis à la transmission, à la position débrayée dans laquelle la transmission du couple moteur est interrompue. La butée d'embrayage est accrochée sur le mécanisme d'embrayage à l'aide du système d'accrochage qui comprend une coupelle d'appui et un jonc d'accrochage agencés pour recevoir la butée d'embrayage. Dans un tel mécanisme d'embrayage, en position embrayée, le diaphragme exerce sur le plateau de pression des efforts suffisants pour serrer le disque d'embrayage et transmettre ainsi le couple moteur à la transmission.

On connaît du document FR 2653195 A1 un mécanisme d'embrayage de type Tiré dans lequel l'opération de débrayage se fait par l'actionnement de la butée d'embrayage sur la partie centrale du diaphragme selon l'axe de rotation du mécanisme dans la direction opposée au moteur. Dans ces conditions, le plateau de pression s'éloigne du disque d'embrayage sous l'effet de moyens de rappel élastiques, libérant ainsi le disque d'embrayage, ce qui permet de cesser de transmettre le couple du moteur à la boîte de vitesses et, le cas échéant, d'effectuer les changements de rapports de vitesses nécessaires D'autres exemples sont divulgués dans des documents FR2750469, GB2193284, KR100705613, CN202326813U et CN203051539U.

Lors de l'assemblage de l'embrayage sur la transmission du véhicule automobile, il est nécessaire d'accrocher la butée d'embrayage sur le mécanisme d'embrayage à l'aide du système d'accrochage. Le mécanisme d'embrayage est préassemblé sur le volant moteur. La butée d'embrayage est préassemblée sur la boite de vitesse du côté de la transmission. La butée d'embrayage est encliquetée sur le mécanisme d'embrayage lors du rapprochement de la boite de vitesses sur le carter du moteur. Cette opération est délicate car elle nécessite l'insertion de la butée d'embrayage dans la coupelle d'accrochage. Sur un véhicule poids lourd, l'axe du mécanisme d'embrayage et de la butée d'embrayage sont orientés selon une axe sensiblement horizontal correspondant à l'axe de rotation du moteur. Le jonc d'accrochage qui possède un certain degré de liberté selon un axe vertical peut s'excentrer sous l'effet de la gravité. La valeur de l'excentration du jonc d'accrochage dépend notamment de la position angulaire du mécanisme d'embrayage par rapport à l'axe de rotation du moteur. Selon la position prise par le jonc d'accrochage par rapport à l'axe de la coupelle d'appui, l'encliquetage de la butée d'embrayage peut être difficile et demander un effort axial important. Dans certains cas, la coupelle d'appui peut se fissurer sous l'action de cet effort. Dans des cas extrêmes d'excentration du jonc d'accrochage, l'encliquetage est impossible.

Un objectif de l'invention est donc de proposer un mécanisme d'embrayage comprenant une coupelle d'appui et un jonc d'accrochage améliorés de manière à permettre un encliquetage fiable, demandant un effort axial faible. Un autre objectif de l'invention est de garantir un bon positionnement du jonc d'accrochage par rapport à la coupelle d'appui lors de l'assemblage de la butée d'embrayage, et cela quelle que soit la position angulaire du mécanisme d'embrayage par rapport à l'axe de rotation du moteur.

L'invention a notamment pour but d'apporter une solution simple, efficace et économique à ce problème.

Selon un premier aspect de l'invention, on atteint au moins l'un des objectifs précités au moyen d'un mécanisme d'embrayage pour embrayage de véhicule automobile, comprenant :
- un couvercle agencé pour être fixé sur un volant moteur,
- un diaphragme présentant un alésage central, ledit diaphragme étant en appui sur le couvercle et centré sur le couvercle,
- une coupelle d'appui comportant :
   une collerette annulaire en appui sur le diaphragme,
   une douille de forme cylindrique d'axe (O) insérée dans l'alésage central du diaphragme,
   des première et une deuxième ouvertures formées sur la douille et
   au moins un orifice de passage formé sur la douille,
- un jonc d'accrochage élastiquement déformable inséré à l'intérieur de la douille de la coupelle d'appui, ledit jonc d'accrochage comprenant au moins un brin d'extrémité traversant l'orifice de passage et deux bossages engagés dans les première et deuxième ouvertures de la douille,
   les première et deuxième ouvertures étant de formes dissymétriques et présentant chacune une surface d'appui apte à retenir le jonc d'accrochage lorsque le jonc d'accrochage est désaxé par rapport à la coupelle d'appui.

Les formes dissymétriques des première et deuxième ouvertures, selon l'invention, présentent l'avantage de réduire le jeu existant entre les bossages du jonc d'accrochage et les première et deuxième ouvertures. La capacité d'excentration du jonc d'accrochage est réduite par rapport à l'axe (O) de la douille selon une direction privilégiée. Les surfaces d'appui sont généralement calibrées par une étape d'emboutissage spécifique de sorte que la valeur d'excentration du jonc d'accrochage est ajustée à façon.

Avantageusement, la collerette comprend une zone d'appui sur le diaphragme, ladite zone d'appui passe par un plan (P) et chacune des surfaces d'appui, formant en partie les première et deuxième ouvertures, est inclinée par rapport au plan (P) selon un angle compris entre 55° et 80 °. Le plan (P) est perpendiculaire à l'axe (O).

Les surfaces d'appui inclinées par rapport au plan (P), selon l'invention, présentent l'avantage de favoriser le positionnement du jonc d'accrochage par rapport à la douille, sans risque de coincement ou arc-boutement d'une pièce par rapport à l'autre. Le jonc d'accrochage peut se déplacer dans les première et deuxième ouvertures et glisser le long des surfaces d'appui sans risquer de se coincer. La forme du l'ouverture coopère ainsi avec le bossage du jonc d'accrochage dans le but de recentrer le jonc par rapport à la coupelle d'appui.

L'invention peut présenter l'une ou l'autre des caractéristiques décrites ci-dessous combinées entre elles ou prises indépendamment les unes des autres :
- les première et deuxième ouvertures peuvent être de formes identiques.
- la coupelle d'appui peut comprendre un plan de symétrie passant par l'axe de la douille cylindrique, la première et la deuxième ouverture étant réparties symétriquement par rapport à ce plan de symétrie. La symétrie de forme présente l'avantage de créer une orientation privilégiée pour le recentrage du jonc d'accrochage par rapport à la coupelle d'appui.
- la première ouverture peut être formée par deux surfaces orientées parallèlement au plan (P), une surface orientée perpendiculairement au plan (P) et une surface d'appui inclinée par rapport au plan (P).
- la deuxième ouverture peut être formée par deux surfaces orientées parallèlement au plan (P), une surface orientée perpendiculairement au plan (P) et une surface d'appui inclinée par rapport au plan (P).
- les première et deuxième ouvertures peuvent être orientées à 120° par rapport au plan de symétrie de la coupelle d'appui et les surfaces d'appui inclinées sont orientées en direction de l'orifice de passage. L'orientation des surfaces d'appui inclinées en direction de l'orifice de passage présente l'avantage de retenir le jonc d'accrochage lorsque l'orifice de passage est orienté vers le bas.
- le bossage du jonc d'accrochage peut être en appui sur la surface d'appui inclinée par rapport au plan (P) lorsque le jonc d'accrochage est désaxé par rapport à la coupelle d'appui.
- le jonc d'accrochage peut comprendre une partie torique d'axe (J), le bossage du jonc d'accrochage s'étendant radialement vers l'extérieur depuis la partie torique.
- le jonc d'accrochage peut être ouvert et comprendre deux brins d'extrémités.
- Selon une variante, les deux brins d'extrémités peuvent traverser un seul orifice de passage formé dans la douille.
- Selon une autre variante, les deux brins d'extrémités peuvent traverser deux orifices de passage formés dans la douille.
- le jonc d'accrochage peut être formé à partir d'un fil d'acier.
- les première et deuxième ouvertures peuvent être de forme trapézoïdale.
- le mécanisme d'embrayage peut être de type tiré.
- le couvercle peut comprendre une plaque annulaire, une jupe externe et une zone de raccordement reliant la plaque annulaire à la jupe externe, le diaphragme étant centré à l'intérieur de la jupe externe.
- le diaphragme est en appui sur un rebord rapporté au niveau de la zone de raccordement du couvercle.
- le diaphragme est en appui sur un rebord embouti directement au niveau de la zone de raccordement du couvercle.

L'invention a également pour objet, selon un autre de ses aspects, un embrayage comprenant :
- un mécanisme d'embrayage reprenant tout ou partie des caractéristiques mentionnées précédemment,
- une butée d'embrayage comprenant un roulement à billes dont la bague intérieure est insérée dans la douille de forme cylindrique de la coupelle d'appui et en appui sur le jonc d'accrochage,
   la butée d'embrayage étant encliquetée sur le mécanisme d'embrayage.

Les formes dissymétriques des première et deuxième ouvertures, selon l'invention, présente l'avantage de réduire le jeu existant entre les bossages du jonc d'accrochage et les première et deuxième ouvertures. La fiabilité de l'accrochage de la butée d'embrayage sur le mécanisme d'embrayage est ainsi améliorée.

Le roulement à billes peut comprendre une bague intérieure, une bague extérieure et des billes réparties angulairement autour des bagues intérieure et extérieure.

La bague intérieure du roulement à billes peut comprendre un cône d'introduction formé sur son extrémité libre, le diamètre d'extrémité du cône d'introduction étant inférieur au diamètre intérieur du jonc d'accrochage. L'écart de diamètre présente l'avantage d'éviter tout risque d'interférence ou de coincement lors de l'introduction de la bague intérieure du roulement à billes au sein du jonc d'accrochage.

La coupelle d'appui peut comprendre une surface conique de centrage du jonc d'accrochage et le jonc d'accrochage est apte à venir appui sur la surface conique lorsque la butée d'embrayage est encliquetée sur le mécanisme d'embrayage. La fiabilité de l'accrochage de la butée d'embrayage sur le mécanisme d'embrayage est ainsi améliorée.

L'invention a également pour objet, selon un autre de ses aspects, un procédé d'assemblage d'un embrayage tel que défini précédemment, comportant au moins les étapes suivantes :
- fournir un mécanisme d'embrayage et une butée d'embrayage,
- introduire la bague intérieure du roulement à billes de la butée d'embrayage dans la douille de la coupelle d'appui jusqu'à venir en appui sur le jonc d'accrochage,
- mettre en appui au moins un des bossages du jonc d'accrochage sur une des surfaces d'appui des première et deuxième ouvertures,
- appliquer un effort axial sur la butée d'embrayage selon l'axe (O) en direction du mécanisme d'embrayage,
- encliqueter le jonc d'accrochage sur la bague intérieure du roulement à billes de la butée d'embrayage.

Selon ce procédé, l'accrochage de la butée d'embrayage sur le mécanisme d'embrayage est facilité. Quelle que soit la position prise par le jonc d'accrochage par rapport à l'axe de la coupelle d'appui, l'encliquetage de la butée d'embrayage est facilité et demande un effort axial faible.

D'autres caractéristiques et avantages de l'invention apparaîtront à l'examen de la description des modes de réalisation qui vont suivre, présentés uniquement à titre d'exemple illustratif et non limitatif, en référence aux figures ci-annexées sur lesquelles :
- la [Figure 1] est une vue en perspective d'un mécanisme d'embrayage de type Tiré et d'une butée d'embrayage selon un premier mode de réalisation de l'invention ;
- la [Figure 2] est une vue de détail du mécanisme d'embrayage selon le premier mode de réalisation de la [Figure 1] ;
- la [Figure 3] est une vue de détail de la coupelle d'appui et du jonc d'accrochage selon le premier mode de réalisation de la [Figure 1] ;
- la [Figure 4] est une vue en coupe de la coupelle d'appui et du jonc d'accrochage selon le premier mode de réalisation de la [Figure 1] ;
- la [Figure 5] est une vue de coté de la coupelle d'appui selon le premier mode de réalisation de la [Figure 1] ;
- la [Figure 6] présente les étapes principales d'assemblage de la butée d'embrayage sur le mécanisme d'embrayage.
- la [Figure 7] est une vue en coupe agrandie de l'extrémité de la bague intérieure du roulement à billes et du jonc d'accrochage associé selon une variante de réalisation de la [Figure 1] ;

Dans la suite de la description, les éléments identiques ou de fonction identique sont repérés, sauf mention contraire, par la même référence numérique.

On utilisera à titre non limitatif et afin d'en faciliter la compréhension, les termes « intérieur / interne » ou « extérieur / externe » par rapport à l'axe de révolution pour la rotation de la transmission du véhicule automobile et suivant une orientation radiale, orthogonale à ladite orientation axiale.

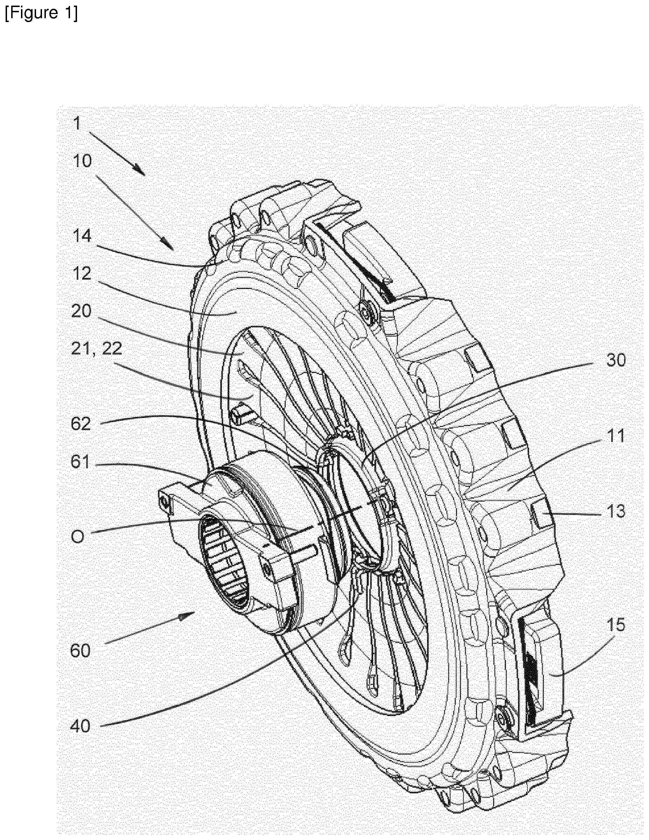

Les [Figures 1 à 5] présentent un embrayage 1 de véhicule automobile, plus précisément un embrayage de véhicules poids lourd comprenant un mécanisme d'embrayage 10 de type Tiré conforme à un premier mode de réalisation de l'invention et une butée d'embrayage 60. La butée d'embrayage 60 comprend un manchon de butée 61, un roulement à billes 62 équipé d'une bague intérieure 62a. Afin de faciliter l'assemblage de la butée d'embrayage, un cône d'introduction 63 est formé sur l'extrémité libre de la bague intérieure 62a.

Le mécanisme d'embrayage 10 selon le premier mode de réalisation comporte un couvercle 11 et un diaphragme 20 centré sur le couvercle 11. Le couvercle 11 comprend notamment une plaque annulaire 12, une jupe externe 13 et une zone de raccordement 14 reliant la plaque annulaire à la jupe externe, le diaphragme étant centré à l'intérieur de la jupe externe 13.

Le diaphragme 20 peut appuyer sur un rebord rapporté au niveau de la zone de raccordement 14 du couvercle ou sur un rebord embouti directement au niveau de la zone de raccordement 14 du couvercle.

Le couvercle 11 est relié par des moyens de fixation appropriés à un volant moteur ou un volant d'inertie (non représenté) lui-même monté sur l'arbre de sortie d'un moteur par exemple du type à combustion interne (non représenté).

Le mécanisme d'embrayage 10 comprend également un plateau de pression 15 adapté pour venir en appui sur un disque d'embrayage (non représenté).

De manière optionnelle, un dispositif de compensation d'usure des garnitures du disque d'embrayage peut être disposé entre le diaphragme 20 et le plateau de pression 15. Le plateau de pression 15 est mobile axialement par rapport au couvercle 11. Le diaphragme 20 est monté entre le couvercle 11 et le plateau de pression 15.

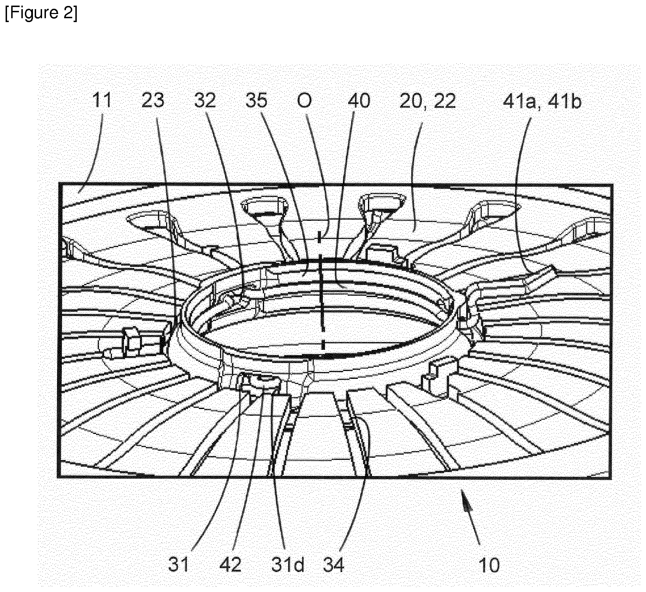

Comme illustré en partie sur la [Figure 2], le diaphragme 20 comporte d'une part une partie périphérique 21 et d'autre part des doigts 22 qui s'étendent radialement vers l'intérieur du diaphragme 20 à partir de la partie périphérique 21. Un alésage central 23 est formé sur l'extrémité des doigts 22 du diaphragme.

Le diaphragme 20 est monté de manière à pouvoir basculer par rapport au couvercle 11 autour du rebord monté entre le couvercle 11 et le diaphragme 20.

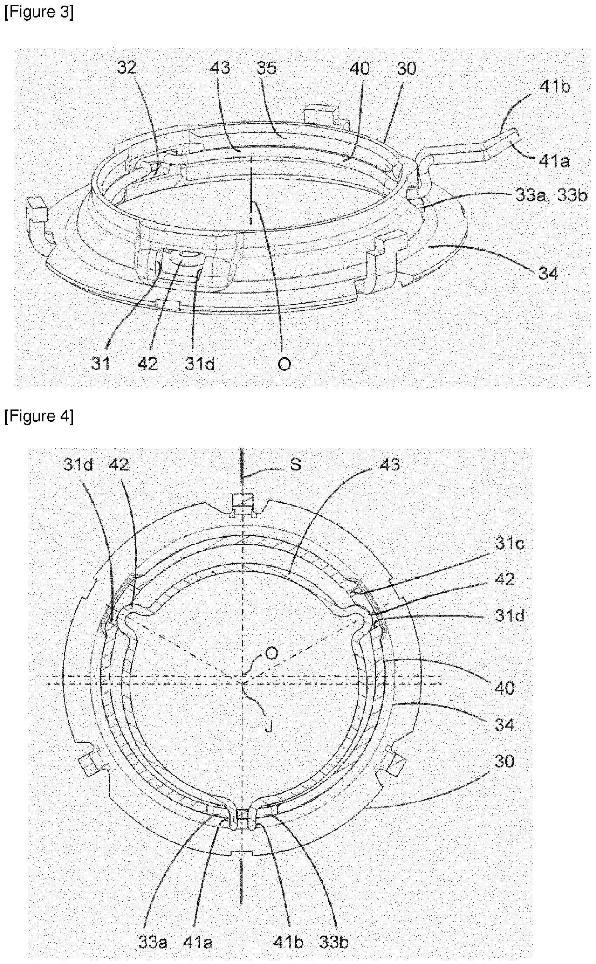

Comme illustré en partie sur les [Figures 3 à 5], le mécanisme d'embrayage 10 comprend également une coupelle d'appui 30 comportant une collerette 34 de forme annulaire, une douille 35 de forme cylindrique d'axe O insérée dans l'alésage central 23 du diaphragme.

La coupelle d'appui 30 est formée à partir d'une tôle en acier emboutie. La collerette 34 et la douille 35 sont reliées par une jonction de matière. La collerette est en appui sur le diaphragme 20 au niveau des extrémités de doigts 22. La collerette 34 comprend ainsi une zone d'appui sensiblement annulaire et plane selon un plan P perpendiculaire à l'axe O. La zone d'appui formée sur la coupelle d'appui 30 est continue. En variante non représentée, la zone d'appui peut être discontinue.

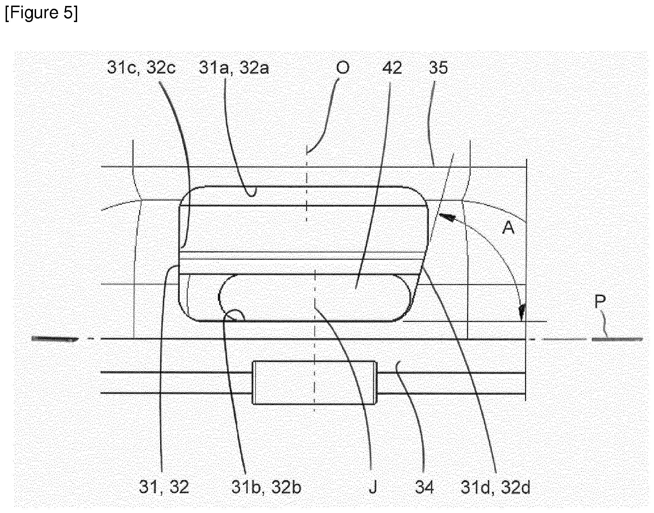

La douille 35 forme un cylindre d'axe O sur lequel est aménagé une première ouverture 31, une deuxième ouverture 32 et deux orifices de passage 33a, 33b. Les ouvertures 31, 32 sont, dans l'exemple du premier mode de réalisation, de forme trapézoïdales. Les ouvertures 31, 32 traversent de part en part l'épaisseur de la douille. Comme illustré sur la [Figure 5], l'ouverture 31 est formée par deux surfaces 31a, 31b orientées parallèlement au plan P, une surface 31c orientée perpendiculairement au plan P et une surface d'appui 31d inclinée par rapport au plan P. La surface d'appui 31d est inclinée par rapport au plan P selon un angle A compris entre 55° et 80 °. Dans l'exemple représenté, l'angle A est de 75°.

L'ouverture 32 est formée également par deux surfaces 32a, 32b orientées parallèlement au plan P, une surface 32c orientée perpendiculairement au plan P et une surface d'appui 32d inclinée par rapport au plan P. La surface d'appui 32d est inclinée par rapport au plan P selon un angle A compris entre 55° et 80°. La deuxième ouverture 32 est de forme identique à la première ouverture 31. La [Figure 5] est ainsi applicable aux deux ouvertures 31 et 32.

La coupelle d'appui comprend un plan de symétrie S passant par l'axe O de la douille 35 cylindrique, les première et deuxième ouvertures 31, 32 sont réparties symétriquement par rapport à ce plan de symétrie S.

La coupelle d'appui comprend enfin une surface conique 36 de centrage du jonc d'accrochage formée sur l'alésage intérieur de la douille 35.

Le mécanisme d'embrayage 10 comprend également un jonc d'accrochage 40 élastiquement déformable inséré à l'intérieur de la douille de la coupelle d'appui 30. Le jonc d'accrochage est formé à partir d'un fil d'acier mis en forme par pliage.

Le jonc d'accrochage 40 comprend tout d'abord une partie torique 43 d'axe J et deux bossages 42 s'étendant radialement vers l'extérieur depuis la partie torique 43. Les bossages sont obtenus par déformation du fil d'acier et permettent d'assouplir le jonc d'accrochage. Le jonc d'accrochage 40 est ouvert et comprend deux brins d'extrémités 41a, 41b. Le diamètre de la partie torique du jonc d'accrochage peut ainsi s'agrandir et laisser passer la bague intérieure 62a du roulement à billes de la butée d'embrayage. Par extension du jonc d'accrochage, puis rétractation du jonc d'accrochage sur la bague intérieure, il est possible d'encliqueter la butée d'embrayage sur la coupelle d'appui 30.

Les deux brins d'extrémités 41a, 41b traversent les deux orifices de passage 33a, 33b formés dans la coupelle d'accrochage. Les brins d'extrémité 41a, 41b permettent à un opérateur de pouvoir écarter le jonc d'accrochage et ainsi autoriser le désassemblage de la butée d'embrayage 60 du mécanisme d'embrayage 10.

Les deux bossages 42 sont engagés dans les première et deuxième ouvertures de la douille 35. Comme cela est illustré sur la [Figure 3], les bossages 42 sont entourés par les surfaces qui définissent la première et la deuxième ouverture 31, 32. Etant donné l'agencement de la coupelle d'accrochage 30, le jonc d'accrochage est maintenu à l'intérieur de la douille 35.

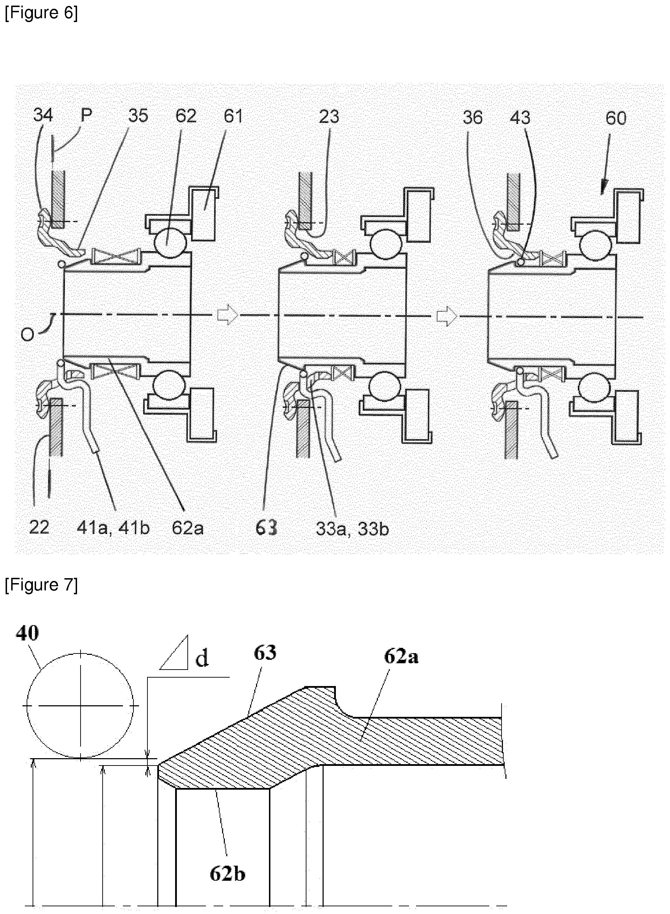

On va maintenant décrire l'assemblage de la butée d'embrayage 60 sur le mécanisme d'embrayage 10 suivant le premier mode de réalisation de l'invention, tel qu'illustré notamment sur les [Figures 5 et 6].

La [Figure 6] illustre notamment les étapes principales d'assemblage de la butée d'embrayage sur le mécanisme d'embrayage réalisé en usine par un opérateur. La [Figure 6] illustre le cas où les brins d'extrémité 41a, 41b du jonc d'accrochage sont orientés vers le bas. Le jonc d'accrochage 40 sous l'effet de la gravité à tendance à s'excentrer par rapport à la coupelle d'appui. Cette position est la plus critique en terme d'excentration du jonc.

Sur la première étape illustrée, l'opérateur fournit un mécanisme d'embrayage et une butée d'embrayage. L'opérateur introduit la bague intérieure 62a du roulement à billes de la butée d'embrayage dans la douille 35 de forme cylindrique de la coupelle d'appui jusqu'à venir en appui sur le jonc d'accrochage. Le jonc d'accrochage est encore libre de se déplacer axialement et radialement par rapport à la douille 35. Le bossage 42 du jonc peut notamment se déplacer librement au sein de l'ouverture 31.

Sur la deuxième étape illustrée, l'extrémité de la bague intérieure du roulement à billes 62 est insérée à l'intérieur de la partie torique 43 du jonc. La butée d'embrayage 60 se déplace axialement en direction du volant moteur, le jonc d'accrochage s'écarte diamétralement et glisse le long du cône d'introduction 63 formé sur la bague intérieure 62a. Dans cette deuxième étape illustrée, le jonc d'accrochage 40 glisse le long de la surface d'appui 31d inclinée par rapport au plan P jusqu'à atteindre la position illustrée sur la [Figure 5]. Dans le cas présent, la surface d'appui est inclinée de 75 ° par rapport au plan P. L'angle est suffisamment important pour éviter tout risque de coincement. Plus précisément, le bossage 42 du jonc d'accrochage est en appui sur la surface d'appui 31d de la première ouverture.

La surface d'appui 31d retient le jonc d'accrochage lorsque celui-ci est désaxé par rapport à la coupelle d'appui. Le désaxage maximal entre l'axe O de la coupelle d'appui et l'axe J du jonc est visible sur la [Figure 4]. Le désaxage maximal autorisé est de l'ordre de 1 mm. Le jonc d'accrochage est cependant maintenu dans une position acceptable en terme d'encliquetage de sorte que l'assemblage de la butée d'embrayage est fiable et robuste.

Sur la troisième étape illustrée, on applique un effort axial sur la butée d'embrayage selon l'axe O de la douille 35 en direction du mécanisme d'embrayage. Le roulement à billes 62 est insérée complètement dans la douille et le jonc d'accrochage 40 est encliqueté sur une portée d'appui externe de la bague intérieure 62a. Le jonc d'accrochage 40 est en appui sur la surface conique 36 de centrage de la coupelle d'appui. L'assemblage de la butée d'embrayage sur le mécanisme d'embrayage est réalisé.

La [Figure 7] illustre une vue en coupe agrandie de l'extrémité de la bague intérieure du roulement à billes 62 et du jonc d'accrochage 40 associé selon une variante de réalisation proche du premier mode de réalisation. L'extrémité de la bague intérieure 62a du roulement à billes 62 comprend une extension de matière 62b formée sur l'alésage intérieur. Cette extension de matière 62b s'étend axialement depuis l'extrémité libre de la bague intérieure en direction du manchon de butée 61. Ainsi, le cône d'introduction 63 formé sur l'extrémité libre de la bague intérieure 62a peut voir son diamètre d'extrémité être réduit. Le diamètre d'extrémité est inférieur au diamètre intérieur du jonc d'accrochage 40, la mesure du diamètre intérieur du jonc d'accrochage étant réalisée à l'état libre. L'écart de diamètre Δd est suffisamment important pour éviter tout risque d'interférence ou de coincement lors de l'introduction de la bague intérieure du roulement à billes 62 au sein de la partie torique 43 du jonc d'accrochage 40.

Bien entendu, la présente invention n'est pas limitée aux modes de réalisation décrits et représentés, fournis à titre d'exemple illustratif et non limitatif.

Selon un autre mode de réalisation, les première et deuxième ouvertures peuvent avoir une forme complexe, dans laquelle une surface d'appui inclinée par rapport au plan P est formée. Le nombre de faces constituant l'ouverture n'est pas limité. Les premières et deuxième ouvertures sont toujours symétriques par rapport au plan de symétrie S.

## Revendications

1. Mécanisme d'embrayage (10) pour embrayage de véhicule automobile, comprenant :
- un couvercle (11) agencé pour être fixé sur un volant moteur,
- un diaphragme (20) présentant un alésage central (23), ledit diaphragme étant en appui sur le couvercle (11) et centré sur le couvercle (11),
- une coupelle d'appui (30) comportant :
- une collerette (34) annulaire en appui sur le diaphragme (20),
- une douille (35) de forme cylindrique d'axe (O) insérée dans l'alésage central (23) du diaphragme (20),
- des première et deuxième ouvertures (31, 32) formées sur la douille (35) et
- au moins un orifice de passage (33a, 33b) formé sur la douille (35),
- un jonc d'accrochage (40) élastiquement déformable inséré à l'intérieur de la douille (35) de la coupelle d'appui, ledit jonc d'accrochage (40) comprenant au moins un brin d'extrémité (41a, 41b) traversant l'orifice de passage (33a, 33b) et deux bossages (42) engagés dans les première et deuxième ouvertures de la douille,
**caractérisé en ce que** les première et deuxième ouvertures (31, 32) sont de formes dissymétriques et présentent chacune une surface d'appui (31d, 32d) apte à retenir le jonc d'accrochage (40) lorsque le jonc d'accrochage est désaxé par rapport à la coupelle d'appui.

2. Mécanisme d'embrayage (10) selon la revendication 1, dans lequel la collerette (34) comprend une zone d'appui sur le diaphragme (20), ladite zone d'appui passe par un plan (P) et chacune des surfaces d'appui (31d, 32d), formant en partie les première et deuxième ouvertures (31, 32), est inclinée par rapport au plan (P) selon un angle (A) compris entre 55° et 80 °.

3. Mécanisme d'embrayage (10) selon la revendication 2, dans lequel la première ouverture (31) est formée par deux surfaces (31a, 31b) orientées parallèlement au plan (P), une surface (31c) orientée perpendiculairement au plan (P) et la surface d'appui (31d) inclinée par rapport au plan (P).

4. Mécanisme d'embrayage (10) selon l'une des revendications 2 ou 3, dans lequel le bossage (42) du jonc d'accrochage est en appui sur la surface d'appui (31d) inclinée par rapport au plan (P) lorsque le jonc d'accrochage est désaxé par rapport à la coupelle d'appui.

5. Mécanisme d'embrayage (10) selon l'une des revendications précédentes, dans lequel le jonc d'accrochage (40) comprend une partie torique (43) d'axe (J), le bossage (42) du jonc d'accrochage s'étend radialement vers l'extérieur depuis la partie torique (43).

6. Mécanisme d'embrayage (10) selon l'une des revendications précédentes, dans lequel le jonc d'accrochage (40) est ouvert et comprend deux brins d'extrémités (41a, 41b).

7. Mécanisme d'embrayage (10) selon l'une quelconque des revendications précédentes, dans lequel la coupelle d'appui (30) comprend un plan de symétrie (S) passant par l'axe (O) de la douille (35), les première et deuxième ouvertures (31, 32) étant réparties symétriquement par rapport à ce plan de symétrie (S).

8. Mécanisme d'embrayage (10) selon l'une quelconque des revendications précédentes, dans lequel les première et deuxième ouvertures (31, 32) sont de forme trapézoïdale.

9. Embrayage (1) comprenant :
- un mécanisme d'embrayage (10) selon l'une quelconque des revendications 1 à 8,
- une butée d'embrayage (60) comprenant un roulement à billes (62) dont la bague intérieure (62a) est insérée dans la douille (35) de forme cylindrique de la coupelle d'appui (30) et en appui sur le jonc d'accrochage (40),
la butée d'embrayage (60) étant encliquetée sur le mécanisme d'embrayage (10).

10. Embrayage (1) selon la revendication précédente, dans lequel la bague intérieure (62a) du roulement à billes (62) comprend un cône d'introduction (63) formé sur son extrémité libre, le diamètre d'extrémité du cône d'introduction (63) étant inférieur au diamètre intérieur du jonc d'accrochage (40).

11. Procédé d'assemblage de l'embrayage (1) selon la revendication 9 ou 10 comprenant les étapes suivantes :
i. Fournir un mécanisme d'embrayage (10) et une butée d'embrayage (60),
ii. Introduire la bague intérieure (62a) du roulement à billes (62) de la butée d'embrayage dans la douille (35) de la coupelle d'appui jusqu'à venir en appui sur le jonc d'accrochage (40),
iii. Mettre en appui au moins un des bossages (42) du jonc d'accrochage sur une des surfaces d'appui (31d, 32d) des première et deuxième ouvertures,
iv. Appliquer un effort axial sur la butée d'embrayage selon l'axe (O) en direction du mécanisme d'embrayage,
v. Encliqueter le jonc d'accrochage (40) sur la bague intérieure (62a) du roulement à billes (62) de la butée d'embrayage.

## Patentansprüche

1. Kupplungsmechanismus (10) für eine Kraftfahrzeugkupplung, umfassend:
- eine Abdeckung (11), die angeordnet ist, um an einem Schwungrad befestigt zu werden,
- eine Membran (20) mit einer zentralen Bohrung (23), wobei die Membran an der Abdeckung (11) anliegt und auf der Abdeckung (11) zentriert ist,
- eine Lagerschale (30) mit:
- einem ringförmigen Flansch (34), der an der Membran (20) anliegt,
- einer zylinderförmigen Hülse (35) mit einer Achse (O), die in die zentrale Bohrung (23) der Membran (20) eingeführt ist,
- einer ersten und einer zweiten Öffnung (31, 32), die an der Hülse (35) ausgebildet sind, und
- zumindest einer Durchgangsöffnung (33a, 33b), die an der Hülse (35) ausgebildet ist,
- einen elastisch verformbaren Haltering (40), der in die Hülse (35) der Lagerschale eingesetzt ist, wobei der Haltering (40) zumindest einen Endstrang (41a, 41b), der durch die Durchgangsöffnung (33a, 33b) verläuft, und zwei Vorsprünge (42), die in die erste und die zweite Öffnung der Hülse eingreifen, umfasst,
**dadurch gekennzeichnet, dass** die erste und die zweite Öffnung (31, 32) asymmetrisch geformt sind und jeweils eine Anlagefläche (31d, 32d) aufweisen, die in der Lage ist, den Haltering (40) zu halten, wenn der Haltering in Bezug auf die Lagerschale verschoben wird.

2. Kupplungsmechanismus (10) nach Anspruch 1, wobei der Flansch (34) einen Anlagebereich an der Membran (20) aufweist, wobei der Anlagebereich durch eine Ebene (P) verläuft und jede der Anlageflächen (31d, 32d), die teilweise die erste und die zweite Öffnung (31, 32) ausbilden, in Bezug auf die Ebene (P) um einen Winkel (A) zwischen 55° und 80° geneigt ist.

3. Kupplungsmechanismus (10) nach Anspruch 2, wobei die erste Öffnung (31) durch zwei parallel zur Ebene (P) ausgerichtete Flächen (31a, 31b), eine senkrecht zur Ebene (P) ausgerichtete Fläche (31c) und die in Bezug auf die Ebene (P) geneigte Anlagefläche (31d) ausgebildet ist.

4. Kupplungsmechanismus (10) nach einem der Ansprüche 2 oder 3, wobei der Vorsprung (42) des Halterings an der in Bezug auf die Ebene (P) geneigten Anlagefläche (31d) anliegt, wenn der Haltering in Bezug auf die Lagerschale verschoben ist.

5. Kupplungsmechanismus (10) nach einem der vorangehenden Ansprüche, wobei der Haltering (40) einen torischen Teil (43) mit der Achse (J) aufweist, wobei sich der Vorsprung (42) des Halterings vom torischen Teil (43) radial nach außen erstreckt.

6. Kupplungsmechanismus (10) nach einem der vorangehenden Ansprüche, wobei der Haltering (40) offen ist und zwei Endstränge (41a, 41b) aufweist.

7. Kupplungsmechanismus (10) nach einem der vorangehenden Ansprüche, wobei die Lagerschale (30) eine durch die Achse (O) der Hülse (35) verlaufende Symmetrieebene (S) aufweist, wobei die erste und die zweite Öffnung (31, 32) in Bezug auf diese Symmetrieebene (S) symmetrisch angeordnet sind.

8. Kupplungsmechanismus (10) nach einem der vorangehenden Ansprüche, wobei die erste und die zweite Öffnung (31, 32) trapezförmig sind.

9. Kupplung (1), umfassend:
- einen Kupplungsmechanismus (10) nach einem der Ansprüche 1 bis 8,
- ein Kupplungslager (60), das ein Kugellager (62) umfasst, dessen Innenring (62a) in die zylinderförmige Hülse (35) der Lagerschale (30) eingesetzt ist und am Haltering (40) anliegt,
wobei das Kupplungslager (60) am Kupplungsmechanismus (10) eingerastet ist.

10. Kupplung (1) nach dem vorangehenden Anspruch, wobei der Innenring (62a) des Kugellagers (62) einen an seinem freien Ende ausgebildeten Einsetzkonus (63) aufweist, wobei der Enddurchmesser des Einsetzkonus (63) kleiner als der Innendurchmesser des Halterings (40) ist.

11. Verfahren zum Zusammenbau der Kupplung (1) nach Anspruch 9 oder 10, umfassend die folgenden Schritte:
i. Bereitstellen eines Kupplungsmechanismus (10) und eines Kupplungslagers (60),
ii. Einsetzen des Innenrings (62a) des Kugellagers (62) des Kupplungslagers in die Hülse (35) der Lagerschale, bis er am Haltering (40) anliegt,
iii. Anlegen zumindest eines der Vorsprünge (42) des Halterings an einer der Anlageflächen (31d, 32d) der ersten und der zweiten Öffnung,
iv. Ausüben einer axialen Kraft auf das Kupplungslager entlang der Achse (O) in Richtung des Kupplungsmechanismus,
v. Einrasten des Halterings (40) am Innenring (62a) des Kugellagers (62) des Kupplungslagers.

## Claims

1. Clutch mechanism (10) for a motor vehicle clutch, comprising:
- a cover (11) designed to be fixed to a flywheel,
- a diaphragm (20) exhibiting a central bore (23), the said diaphragm bearing against the cover (11) and being centred on the cover (11),
- a bearing cup (30) comprising:
- an annular flange (34) bearing on the diaphragm (20),
- a bushing (35) of cylindrical shape with axis (O), inserted into the central bore (23) of the diaphragm (20),
- first and second openings (31, 32) formed on the bushing (35), and
- at least one passage hole (33a, 33b) formed on the bushing (35),
- an elastically deformable retaining ring (40) inserted into the bushing (35) of the bearing cup, the said retaining ring (40) comprising at least one end strand (41a, 41b) passing through the passage hole (33a, 33b) and two bosses (42) engaged in the first and second openings of the bushing,
**characterized in that** the first and second openings (31, 32) are of asymmetric shapes and each exhibit a bearing surface (31d, 32d) able to retain the retaining ring (40) when the retaining ring is off-axis with respect to the bearing cup.

2. Clutch mechanism (10) according to Claim 1, in which the flange (34) comprises a bearing zone for bearing on the diaphragm (20), the said bearing zone passes through a plane (P) and each of the bearing surfaces (31d, 32d), which in part form the first and second openings (31, 32), is inclined with respect to the plane (P) at an angle (A) comprised between 55° and 80°.

3. Clutch mechanism (10) according to Claim 2, in which the first opening (31) is formed by two surfaces (31a, 31b) oriented parallel to the plane (P), a surface (31c) oriented perpendicular to the plane (P) and the bearing surface (31d) that is inclined with respect to the plane (P).

4. Clutch mechanism (10) according to either of Claims 2 and 3, in which the boss (42) of the retaining ring bears against the bearing surface (31d) that is inclined with respect to the plane (P) when the retaining ring is off-axis with respect to the bearing cup.

5. Clutch mechanism (10) according to one of the preceding claims, in which the retaining ring (40) comprises a toric part (43) of axis (J), the boss (42) of the retaining ring extends radially outwards from the toric part (43).

6. Clutch mechanism (10) according to one of the preceding claims, in which the retaining ring (40) is open and comprises two end strands (41a, 41b).

7. Clutch mechanism (10) according to any one of the preceding claims, in which the bearing cup (30) comprises a plane of symmetry (S) passing through the axis (O) of the bushing (35), the first and second openings (31, 32) being distributed symmetrically with respect to this plane of symmetry (S).

8. Clutch mechanism (10) according to any one of the preceding claims, in which the first and second openings (31, 32) are of trapezoidal shape.

9. Clutch (1) comprising:
- a clutch mechanism (10) according to any of Claims 1 to 8,
- a clutch bearing (60) comprising a ball bearing (62) of which the inner ring (62a) is inserted into the cylindrically shaped bushing (35) of the bearing cup (30) and bears against the retaining ring (40),
the clutch bearing (60) being clip-fastened onto the clutch mechanism (10).

10. Clutch (1) according to the preceding claim, in which the inner ring (62a) of the ball bearing (62) comprises an introduction conical taper (63) formed on its free end, the end diameter of the introduction conical taper (63) being smaller than the inside diameter of the retaining ring (40).

11. Method for assembling the clutch (1) according to Claim 9 or 10, comprising the following steps:
i. supplying a clutch mechanism (10) and a clutch bearing (60),
ii. introducing the inner ring (62a) of the ball bearing (62) of the clutch bearing into the bushing (35) of the bearing cup until it comes to bear on the retaining ring (40),
iii. bringing at least one of the bosses (42) of the retaining ring to bear on one of the bearing surfaces (31d, 32d) of the first and second openings,
iv. applying an axial force to the clutch bearing along the axis (O) in the direction of the clutch mechanism,
V. clip-fastening the retaining ring (40) onto the inner ring (62a) of the ball bearing (62) of the clutch bearing.
